# EUROPEAN PATENT SPECIFICATION

(11) **EP 0 613 853 B1**
(45) Date of publication and mention of the grant of the patent: **15.09.1999**
(21) Application number: 93116957.7
(22) Date of filing: 20.10.1993
(51) Int. Cl.: B66F 9/07, B66F 9/075, B66F 17/00

(54) **Crane equipped with a maintenance elevator**
Kran ausgerüstet mit einem Wartungsaufzug
Grue équipée d'un ascenseur d'entretien

(30) Priority: 24.12.1992 JP 34300592; 05.03.1993 JP 4424093; 30.06.1993 JP 16077793; 28.07.1993 JP 18541293
(43) Date of publication of application: 07.09.1994
(73) Proprietor: DAIFUKU CO., LTD., Osaka-shi, Osaka (JP)
(72) Inventor: Ohgita, Kazayoshi, c/o Daifuku Co., Ltd., Komaki-shi, Aichi-ken (JP); Suguwara, Tomokatsu, c/o Daifuku Co., Ltd., Komaki-shi, Aichi-ken (JP)
(74) Representative: Le Vrang, Klaus

(56) References cited:
- DE-C- 944 359
- FR-A- 2 400 479
- US-A- 3 250 402
- US-A- 3 586 193
- US-A- 3 635 315
- US-A- 3 908 801
- US-A- 4 433 752
- US-A- 4 546 852
- PATENT ABSTRACTS OF JAPAN vol. 14, no. 113 (M-0944) 2 March 1990 & JP-A-01 313 202 (DAIFUKU CO. LTD.) 18 December 1989
- DATABASE WPI Week 8319, Derwent Publications Ltd., London, GB; AN 83-G3317K & SU-A-910 527 (ASSEMBLY MECHN CONS.) 7 March 1982

## Description

### FIELD OF THE INVENTION

The present invention relates to a handling apparatus for use in handling articles in, for example, an automatic housing facility and, more particularly, to a maintenance-elevator-equipped handling apparatus including a warehousing carriage and a maintenance elevator adapted for use in maintenance and check operations.

### BACKGROUND OF THE INVENTION

Hitherto, a crane of this sort has been known as disclosed in Japanese Patent Application Laid-Open No. 1- 313202 in which is proposed a travelling crane equipped with an elevator cab. In this prior art arrangement, the travelling crane includes a travelling body comprising a lower frame guided by a lower guide rail, an upper frame guided by an upper guide rail, and a pair of posts, front and rear, integrally connecting the two frames, and a carriage upward and downward movable between the two posts, with load transfer means mounted on the carriage.

A pair of guide rails, right and left, are mounted through a bracket to one of the posts on the outer side thereof as viewed from the direction of travel of the travelling body. An elevator cab is upward and downward movably carried on the guide rails and is equipped with brake means operable to act on the guide rails. Within the lower frame at a level below the posts there are provided a motor and a reduction gear for driving the elevator cab to move upward and downward, with a vertical run drive chain trained between a toothed drive wheel mounted to an output shaft of the motor or reduction gear and a toothed driven wheel disposed in the upper frame, the vertical run drive chain being connected to the elevator cab.

According to such prior art arrangement, the travelling crane can, when manually operated by an operator getting on a carriage-side cab or remotely operated from the ground side, perform load delivery to or load withdrawal from a target site of the rack through a combination of horizontal run of the travel body, vertical run of the carriage, and forking movement of load transfer means.

The elevator cab is used when emergency repairs are required due to, for example, a failure of the carriage or a load collapse occurring during the operation of the crane, as well as for regular maintenance and checkup purposes. In such a case, an operator gets on the elevator cab and manipulates a control panel provided in the cab to drive the motor to rotate the vertical drive chain forward and reverse, whereby the elevator cab will be moved upward and downward along the guide rail. When the elevator cab is brought to a stop at a position opposite to the carriage, the operator transfers from the elevator cab to the carriage to carry out the required repairs and/or maintenance and checkup work.

The motor and the like for driving the elevator cab to move upward and downward are located within the lower frame, and the vertical run drive chain is trained about toothed driven wheels in the upper frame in a loop pattern. Therefore, the total length of the vertical run drive chain is about twice the length of the post. This results in greater shocks caused upon the elevator cab being started or brought to a stop, and results further in greater stretching of the chain due to the load applied (which, in this case, means the own weight of the elevator cab including the weight of the operator). Thus, the elevator cab is forced to get abruptly bounced (or subject to abrupt vertical jolting) when it is started or brought to a stop. The fact that the vertical run drive chain is of such a large length is disadvantageous in respect of cost.
Furthermore, the fact that the motor and reduction gears are disposed within the lower frame does not permit easy maintenance and checkup.

### DISCLOSURE OF THE INVENTION

The objects of the present invention are to provide a maintenance elevator-equipped handling apparatus such that the starting and stopping of the maintenance elevator involves less shocks and to provide a maintenance elevator-equipped handling apparatus in which vertical run drive means for upward and downward movement of the maintenance elevator can be suitably arranged.

In order to accomplish the foregoing objects, according to the present invention a maintenance elevator-equipped handling apparatus includes a chain element disposed along the post, and vertical run drive means disposed on the underside of the maintenance elevator, and a toothed drive wheel of said drive means engaged with the chain element.

According to such arrangement, when the vertical run drive means is actuated under panel control in the maintenance elevator, the vertical run drive means come into engagement with the chain element linearly disposed along the post, so that the maintenance elevator can be moved upward along the post. For this purpose the chain element may be considerably short in total length, or may be of the same length as the post. Thus, the maintenance elevator is less subject to becoming bounced due to shocks caused upon the elevator being started or brought to a stop. The fact that the chain element is considerably short in total length results in reduced elongation and also in reduced costs.

The maintenance elevator-equipped handling apparatus according to the invention includes a vertical run drive means disposed on the underside of the maintenance elevator, and a toothed drive wheel of said drive means engaged with the chain element.

According to such arrangement, the vertical run drive means is disposed in such a way that it projects from the underside of the maintenance elevator. This enables the operator to readily perform maintenance and checkup operations even when the maintenance elevator is at its lowest position in an easy and save way by using the ladder.

### BRIEF DESCRIPTION OF THE DRAWINGS

FIG. 1 illustrates one embodiment of the present invention and is a partially cutaway side view of an automatic warehousing facility having a maintenance-elevator-equipped handling apparatus employed therein;
FIG. 2 is a partially cutaway view in front elevation showing the automatic warehousing facility using the maintenance-elevator-equipped handling apparatus;
FIG. 3 is a cross-sectional plan view of a maintenance elevator portion of the maintenance-elevator-equipped handling apparatus;
FIG. 4 is a front view of the maintenance elevator portion of the maintenance-elevator-equipped handling apparatus;
FIG. 5 is a perspective view of a guide rail for the maintenance elevator;
FIG. 6 is a partially cutaway front view of a vertical guide portion for the maintenance-elevator-equipped handling apparatus;
FIG. 7 is a partially cutaway side view of the vertical guide portion;
FIG. 8 is a cross-sectional plan view of the vertical guide portion;
FIG. 9 is a partially cutaway side view of an elevator portion of a maintenance-elevator-equipped handling apparatus which represents another embodiment of the invention;

### DESCRIPTION OF THE PREFERRED EMBODIMENTS

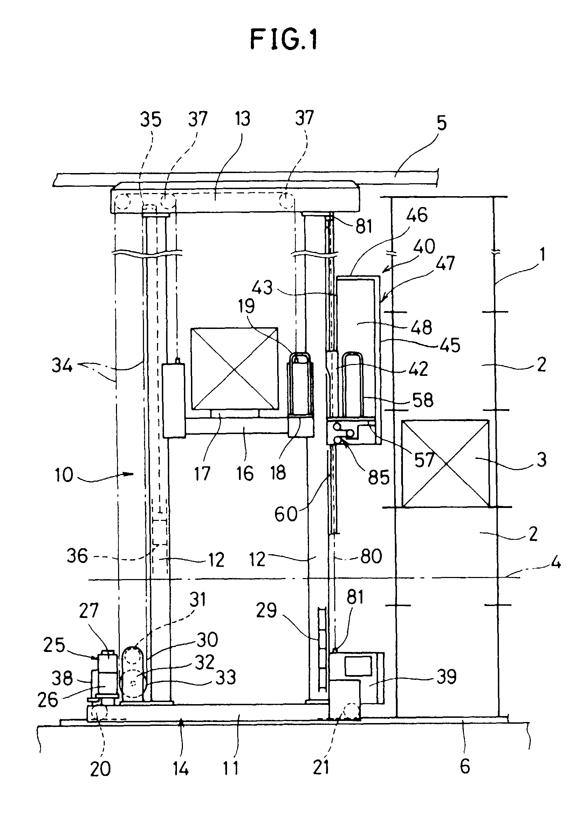

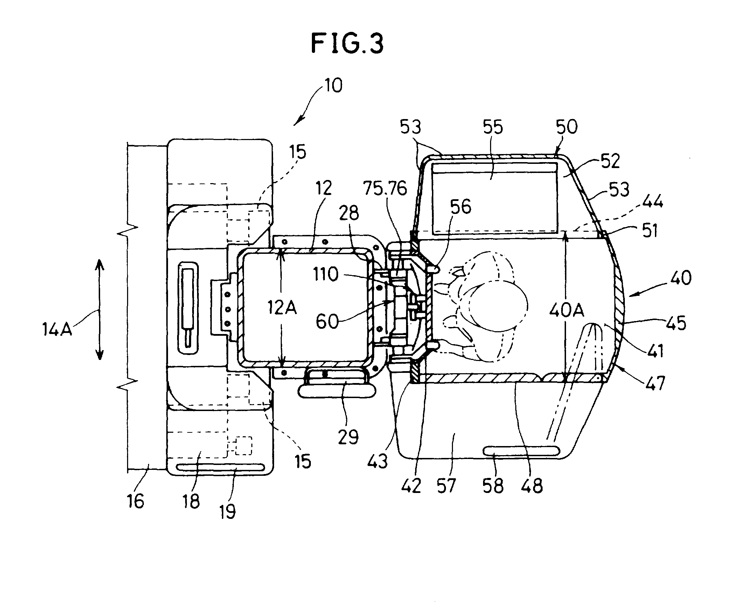

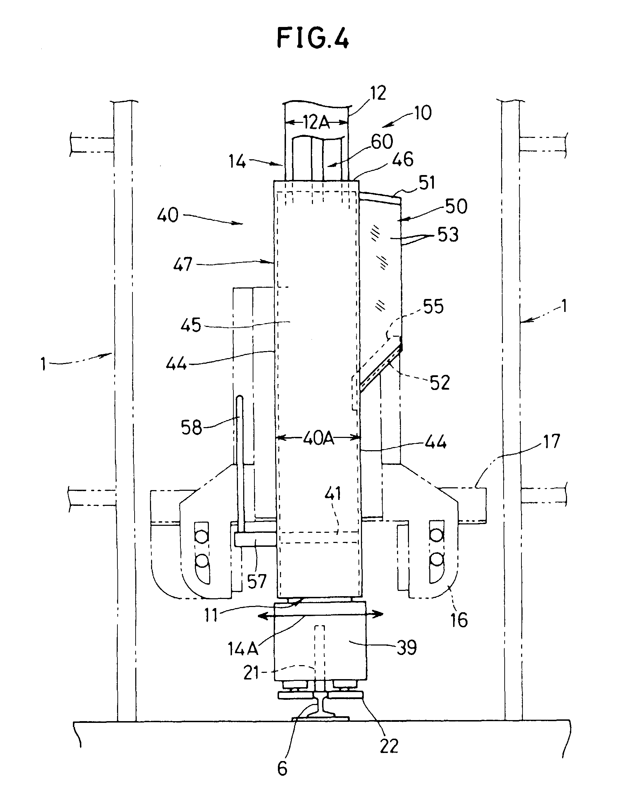

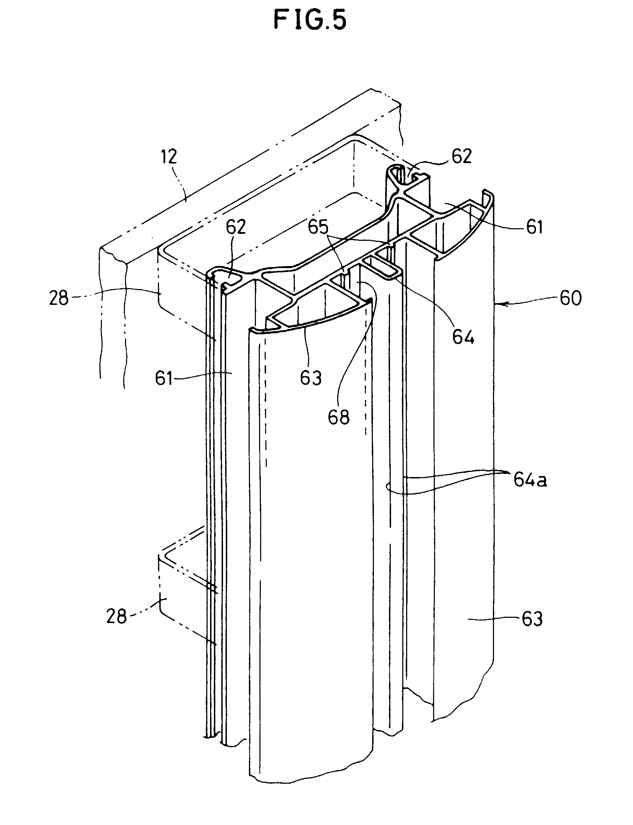

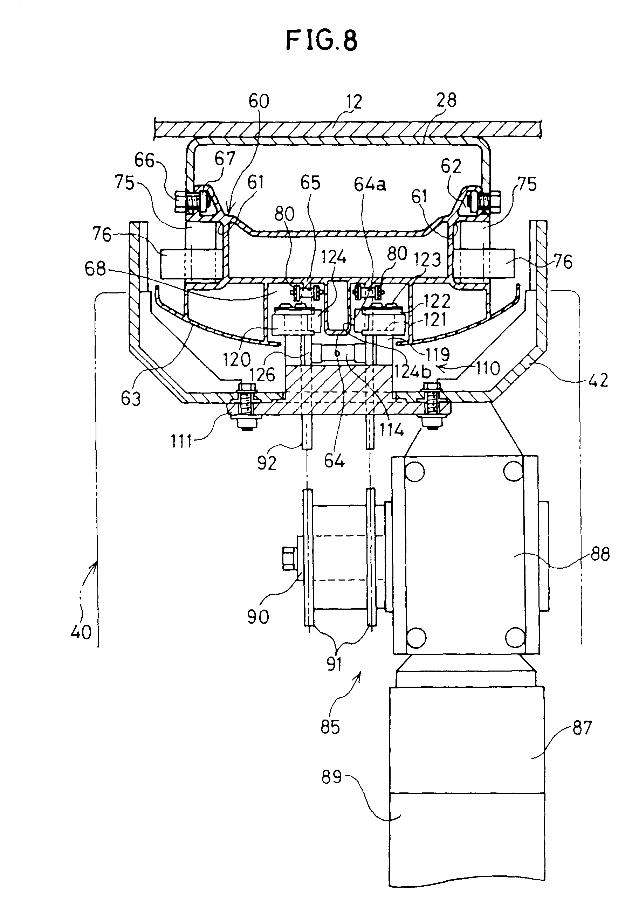

One embodiment of the present invention will now be described with reference to FIGS.1 through 8.

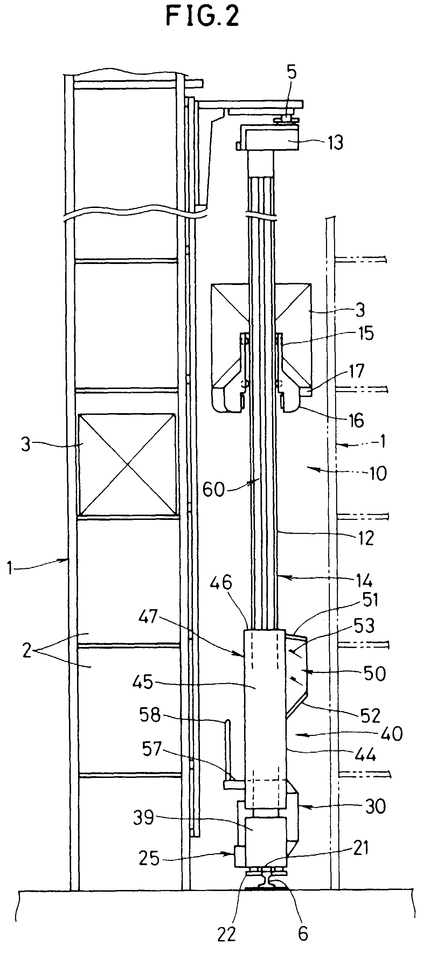

In FIGS.1 and 2, a framework-like rack 1 defines pluralities of vertically and horizontally spaced apart storage sections 2, each of the storage sections 2 having a cross arm for supporting a load 3 (directly or via a pallet). A pair of such racks 1 are arranged in parallel across a passageway. In the passageway there is disposed a maintenance elevator-equipped handling apparatus 10 for movement on a predetermined track 4 extending along the racks 1.

The maintenance elevator-equipped handling apparatus 10 has a travelling body 14 comprising a lower frame 11, a pair of posts 12, front and rear, in the form of square pipes (or round pipes) extending vertically from the lower frame 11, and an upper frame 13 interconnecting the upper ends of the posts 12. A carriage 16 is disposed between opposed inner sides of the posts 12 (as viewed in the direction of movement of the travelling body), the carriage 16 being guided for movement upward and downward through guide rollers 15 guided along opposite outer sides of the respective posts 12. On the carriage 16 there is disposed a handling element (fork element) 17 which is retractably extendable relative to each storage section 2. The upper frame 13 has guide means guided by a ceiling rail 5.

The lower frame 11 carries at one end a drive wheel 20 movable in rolling contact with a floor rail 6, and at the other end a driven wheel 21. A pair of guide wheels 22, right and left, are free-rotatably provided at both ends of the lower frame 11, the guide wheels 22 being guided along sides of the floor rail 6. A horizontal run drive unit 25 mounted to one end of the lower frame 11 includes a reduction gear 26 geared to the drive wheel 20, and a horizontal run drive means (flange-type brake-equipped motor or the like) 27 geared to the reduction gear 26.

A vertical run drive unit 30 is mounted to one end of the lower frame 11, the vertical drive unit 30 being geared to the carriage 16. The vertical drive unit 30 comprises vertical run drive means (a motor and the like) 31 and a reduction gear 32. The vertical drive unit 30 carries a drive wheel 33 which is geared to an output shaft extending from the reduction gear 32.

Two non-endless cord elements (ropes, chains or the like) 34 are trained about the drive wheel 33, one end of each cord element 34 being introduced into one of the posts 12 via first guide wheels 35 disposed in the upper frame 13 for being connected to a counter weight 36 housed in the one post 12. The other end of each cord element 34 is connected to an upper portion of the carriage 16 via second guide wheels 37 disposed in the upper frame 13.

At one end of the lower frame 11 there is provided a power unit 38 for controlling the horizontal run drive unit 25 and vertical run drive unit 30. A control unit 39 for controlling individual operative portions of the maintenance elevator-equipped handling apparatus 10 is provided at the other end of the lower frame 11. The control unit 39 has its control surface oriented sideways.

In FIGS. 1 through 4, there is shown a maintenance elevator 40 disposed at the outer side (rear side) of the other post 12 as viewed in the direction of movement of the travelling body which is upward and downward movably provided for use in maintenance and checking and for emergency use. The maintenance elevator 40 has a vertically long, rectangular box-shaped body 47 comprising a bottom plate 41, a bracket 42 serving as a guide for upward and downward movement which extends upwardly from the front side of the bottom plate 41, a front plate 43 extending upward from the bracket 42, a side plate 44 extending upward from the right side of the bottom plate 41 and having a side edge integrally joined with both the bracket 42 and the front plate 43, a rear plate 45 extending upward from the rear side of the bottom plate 41 and having a side edge integrally joined with the side plate 44, and a ceiling plate 46 integrally joined with upper edges of the front plate 43, side plate 44 and rear plate 45.

The maintenance elevator 40 has a bay window-like portion 50 projecting outward from an upper part of its body portion at one side thereof as viewed widthwise (14A) of the travelling body 14. The maintenance elevator 40 has its width or transverse length 40A designed to be equal to or slightly larger than the transverse length 12A of each post 12, except the bay window-like portion 50.

The bay window-like portion 50 comprises a frame 51 integral with the side plate 44 of the body 47, the frame 51 including an inclined support plate 52 which is sloped outwardly upward. The bay window-like portion 50 has front, rear and outer wall portions formed of a transparent plate 53 which are mounted to the frame 51. A control board 55 is provided on the inclined support plate 52 in the maintenance elevator 40. A handle portion 56 is provided in the bracket 42.

At the other side of the maintenance elevator 40, as viewed widthwise (14A) of the travelling body, there is provided a freely openable and closable door member 48 of the foldable type. A maintenance elevator side gangway 57, integral with the bottom plate 41, extends forwardly from the other side of the door member 48 at its closed position. A safety fence 58 is provided extending along an outer edge portion of the maintenance elevator side gangway 57. A carriage side gangway 18 extends from the other side of the carriage 16 in such a way as to enable the maintenance elevator side ganway 57 to be positioned in spaced apart opposed relation to the carriage side gangway 18. A safety fence 19 is provided extending along an outer side edge of the carriage side gangway 18. A ladder 29 is provided between the two gangways 18 and 57 and at the lower end of the post 12.

The maintenance elevator 40 is upward and downward movably supported on a guide rail 60 mounted to the outer side of the post 12 via the earlier mentioned bracket 42. As FIGS. 1 and 5 to 8 show, the guide rail 60 has a pattern rail structure formed by aluminum extrusion and comprises guide portions 61 of a laterally outwardly opening U-groove shape for the maintenance elevator formed at opposite sides, coupling-purpose dovetail grooves 62 open laterally outwardly which are formed in inwardly spaced parallel relation to the guide portions 61, and outwardly convexed arcuate cover plate portions 63 formed in spaced parallel relation externally of the guide portions 61, there being formed an outwardly opening U groove portion 68 intermediate the cover plate portions 63.

In the U groove portion 68 there is formed integrally therewith an outwardly projecting engagement portion 64 of a rectangular pipe configuration. The engagement portion 64 defines flat abutment faces 64a on opposite sides thereof. At both sides of the engagement portion 64 there are formed outwardly protruding chain guide portions 65 integrally therewith.

The guide rail 60 is fixedly secured by and between coupling members 28 attached to the post 12 on the outer side thereof at a plurality of vertically spaced locations. Each of the coupling members 28 is gantry shaped in plan view and its legs have free ends brought in abutment against coupling-purpose dovetail grooves 62 from the outer side thereof, with bolts 66 passed through the free ends of the legs from the outer side, the bolts 66 being brought into thread engagement with nut elements 67 positioned within the coupling dovetail grooves 62.

The maintenance elevator 40 is vertically movably supported on the guide rail 60 through longitudinal regulation rollers 75 and lateral regulation rollers 76 which are arranged in the bracket 2. The bracket 42 has a gantry shaped cross-sectional configuration opening toward the post 12 such that to free ends of its two legs are freely rotatably mounted the regulation rollers 75, 76 which engage the guide portions 61 for being thereby supported and guided.

In order to enable the maintenance elevator 40 to be upwardly and downwardly moved along the guide rail 60, a pair of chains, right and left 80 are trained between the lower frame 11 and the upper frame 13, opposite ends of the chains 80 being respectively connected to the lower frame 11 and the upper frame 13 through coupling elements 81. For this purpose, the chains 80 are abuttable against the chain guide portions 65 from outer side. On the maintenance elevator 40 side there is provided vertical run drive means 85 operative to engage the chains 80.

On the underside of bottom plate 41 of the body 47 at the forward end there is provided a bracket 86 in which is disposed the vertical run drive means 85. The vertical run drive means 85 comprises a motor 87, a reduction gear 88 and a brake means 89 geared to the the motor 87 in longitudinally spaced apart relation, a pair of toothed drive wheels 91, right and left, mounted to an output shaft 90 of the reduction gear 88, and pairs of vertically spaced apart freely rotatable toothed wheels 92, 93, right and left, arranged forwardly of the toothed drive wheels 91.

A pair of rods 94, right and left, are upward and downward movably disposed in the bracket 86 via guide members 95, the rods 94 being integrally connected at top ends thereof by a jumper plate 96. Upper shaft members 97 are fixed to upper portions of the respective rods 94 through a pin or the like, with a freely rotatable upper toothed wheel 92 mounted to an upper portion of each of the upper shaft members 97. Above each upper shaft member 97 there is provided an upper compression coil spring 98 which urges the respective rod 94 downward, there being also provided an upper detecting device (a limit switch) for detecting the respective upper shaft member 97 when moved upward against the upper compression coil spring 98.

Lower shaft members 100 are fitted on the lower portions of the respective rods 94 for free vertical movement relative to each other, with lower freely rotatable toother wheels 93 mounted to the lower shaft members 100. Below the respective lower shaft members 100 are disposed lower compression coil springs 101 which urge the respective lower shaft members 100 upward, there being also provided lower detecting devices (limit switches) 102 for detecting the respective lower shaft members 100 when moved downward against the lower compression coil springs 101.

The chains 80 are trained on respective freely rotatable upper toothed wheels 92 from the front side for engagement therewith and, in turn, trained on respective toothed drive wheels 91 from the rear side for engagement therewith, being then trained on respective freely rotatable lower toothed wheels 93 from the front side for engagement.

On the bracket 42 side of the maintenance elevator 40 there is provided a fall preventive device 110 operative to act on the engagement portion 64. The fall preventive device 110 is disposed above the freely rotatable toothed wheels 92, 93 and has a box frame-like body 111 integral with the bracket 42. The body 111 is formed with a vertically extending through-hole 112 into which is inserted from below an upstanding shaft 113 connected to the jumper plate 96.

A block 114 is fixedly fitted over a median portion of the shaft 113 and, above the block 114, there is disposed a compression coil spring 115 urging the shaft 113 downward via the block 114. The block 114 has a transversely extending horizontal pin 116.

In the body 111 there is provided a case member 117 which comprises a vertically rectangular plate-shaped base portion 118, a pair of arm portions, right and left, 119 extending from the base portion 118 to the engagement portion 64, and pad-receiving portions 120 fixed to free ends of the arm portions 119. The pad receiving portions 120 have stepped portions 121 which are open at their opposed sides as well as at outer sides.

The opposed surfaces of the stepped portions 121 define inclined guide faces 121a which come closer to each other toward their upper ends.

A cover member 122 for closing an outer open portion of each of the stepped portions 121 is provided which is fixed to the respective pad receiving portion 120 via bolts 123. Pads 124 disposed within the respective stepped portions 121 are of a wedge-like configuration and have inclined surfaces which serve as inclined guided surfaces 124a for abutment against the respective inclined guide faces 121a of the stepped portions 121. Parallel opposed surfaces of the pads are formed as flat holding surfaces 124b.

A pair of links, right and left, 126 are vertically pivotably mounted between the arm portions 119 of the case member 117. The links 126 are attached at their median portions to support shafts 125, inner ends of the links 126 being respectively connected to the horizontal pins 116 of the block 114 for relative pivotal movement. Outer ends of the links 126 are connected to the lower portions of the respective pads 124 through lateral pins 127 for relative pivotal movement.

As earlier described, chains 80 are trained about freely rotatable upper toothed wheels 92, whereby rods 94 are moved upward against the upper compression coil springs 98 thereby to urge the shafts 113 upward against the compression coil springs 115 via the jumber plate 96. The upward movement of the shafts 113 results in downward movement of the pads 124 via links 126 and the like. Thus, the foregoing elements 94 to 98, 100, 101, 113 to 116, and 125 to 127 constitute interlocking means for moving the two pads 124 away from each other against resilient urging force when a suspension tension is acting upon the chains 80.

In the above described embodiment, the maintenance elevator equipped handling apparatus 10 perform a combination of operations including actuating the horizontal run drive unit 25 to horizontally move the travelling body 14, actuating the vertical run drive unit 30 to move the carriage 16 upward and downward, and actuating the handling element 17 to perform forking movement, through operating commands issued by manipulating the control unit 39, so that delivery of load 3 to and from a target storage portion 2 of the rack 1 can be carried out.

During such operations, the maintenance elevator 40 is held stationary at its lowermost position close to the lower frame 11. Therefore, when it is necessary for the operator to walk for access into the predetermined path 4 during such time of rest, the operator can, at one side of the maintenance elevator equipped handling apparatus 10, pass under the bay window portion 50 for entry into the predetermined path without any obstruction due to the maintenance elevator 40, while at the other side of the apparatus 10 the operator can walk on the maintenance elevator side gangway 57 for entry into the predetermined path without any obstruction from the maintenance elevator 40.

The maintenance elevator 40 is used in carrying out emergency repairs as required, for example, when some trouble has occurred with the carriage 16 or a load collapse has occurred, as well as for purposes of carrying out regular maintenance and checkup. A ground-side operator can get on the maintenance elevator side gangway 57 by utilizing the ladder 29 and, from the gangway 57 side, he can open the door member 48 to get on the maintenance elevator and manipulate the control panel 55.

In that case, necessary operation is carried out in such a manner that the operator in the maintenance elevator 40 positions his upper body portion in the bay window portion 50 to manipulate the control panel disposed in a lower part of the bay window portion 50 while looking forward, backward and/or sideways through the transparent plate 53 and without his view being obstructed by the post 12 and the like. If the operator is forced to assume an unstable posture, he may control the control panel 55 by right hand, for example, while gripping the handle portion 56 by left hand.

In this way, the operator can manipulate the control panel 55 so that the motor 87 of the vertical run drive means 85 can be driven forward and reverse, whereby toothed drive wheels 91 can be rotated forward and rearward through the reduction gear 88 and output shaft 90. Thus, the drive wheels 91 which are in constant engagement with the chains 80 trained linearly (in a rack fashion) between the upper and lower frames 13 and 11 are driven into forced rotation, so that the maintenance elevator 40 can be moved upward along the guide rail 60. For purposes of taking corrective action in case of load collapse, for example, the maintenance elevator 40 can be brought to a stop at a position opposite to the carriage 16. In this case, the maintenance elevator side gangway 57 is positioned opposite to the carriage side gangway 18 at an even level.

During upward and downward movement of the maintenance elevator 40, a suspension tension is acting upon the chains 80. The chain 80 secured at its upper end to the upper frame 13 by the coupling element 81 is trained on the toothed drive wheel 91 for engagement therewith, so that the portion of the chain 80 which is positioned above the freely rotatable toothed wheel 92 is subject to a suspension tension. Under this suspension tension the rods 94 are moved upward against the upper compression coil spring 115 via the upper free-rotatable toothed wheel 92 and upper shaft element 97.

As a consequence, the shaft 113 is moved upward against the force of the compression coil spring 115 via the jumper plate 96. At same time, the block 114 which is integral with the shaft 113 is moved upward against the force of the compression coil spring 115. Thus, the links 126 are caused to pivot about the support shaft 125 to lower the pads 124. The descent of the pads 124 produces the effect of a wedge removal so that the holding surfaces 124b are moved away from the abutment surfaces 64a, the fall preventive device 110 being thus rendered inoperative. Further, because of the fact that the regulation rollers 75, 76 are guided by the guide portions 61, there is no possible jolting. With these characteristic features, the maintenance elevator 40 can be smoothly and conveniently operated for upward and downward movement.

The upper detecting devices 99 become turned on in response to the ascent of the upper shaft members 97, and likewise the lower detecting devices 102 become turned on in response to the descent of the lower shaft members 100. When the respective detecting devices 99, 102 are in sensing operation in this way, there is no emergency situation and, therefore, the vertical run drive means 85 perform their normal operation and the fall preventing device 110 is held inoperative.

As stated above, for purposes of carrying out required repairs or a maintenance and checkup operation, the maintenance elevator 40 is caused to stop upward movement and the brake means 89 is operated; and then the operator opens the door member 48 and moves onto the maintenance elevator side gangway 57. Protected by the safety fences 19, 58, the operator can transfer from the maintenance elevator side gangway 57 to the carriage side gangway 18 while having a hold of the safety fence 19, 58, in order to carry out the required repairs or maintenance and checkup.

Upon completion of the required operation, the operator can return from the carriage 16 to the maintenance elevator 40 by utilizing the gangways 18, 57. The maintenance elevator 40 is then lowered to its lowermost position and the operator lands on the ground using the ladder 29, whereupon a series of operations using the maintenance elevator 40 is ended.

During upward or downward movement of the maintenance elevator 40, if one chain 80 becomes fractured or stretched, the brake device 89 of the vertical run drive means 85 operates in response to such situation. The suspension tension acting upon the freely rotatable toothed wheels 92, 93 about which the respective chain 80 is trained is released, whereupon the shaft members 97, 100 are shifted under the elastic force of the compression coil springs 98, 101 to render the detecting devices 99, 102 inoperative. Accordingly, the brake device 89 of the vertical run drive means 85 is automatically actuated to stop subsequent vertical movement of the maintenance elevator 40, alarming the operator of the situation.

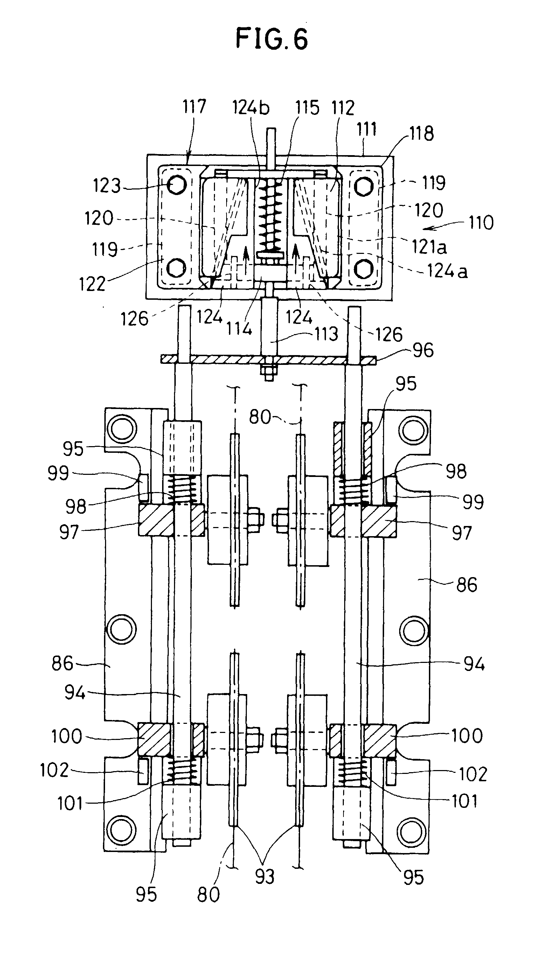

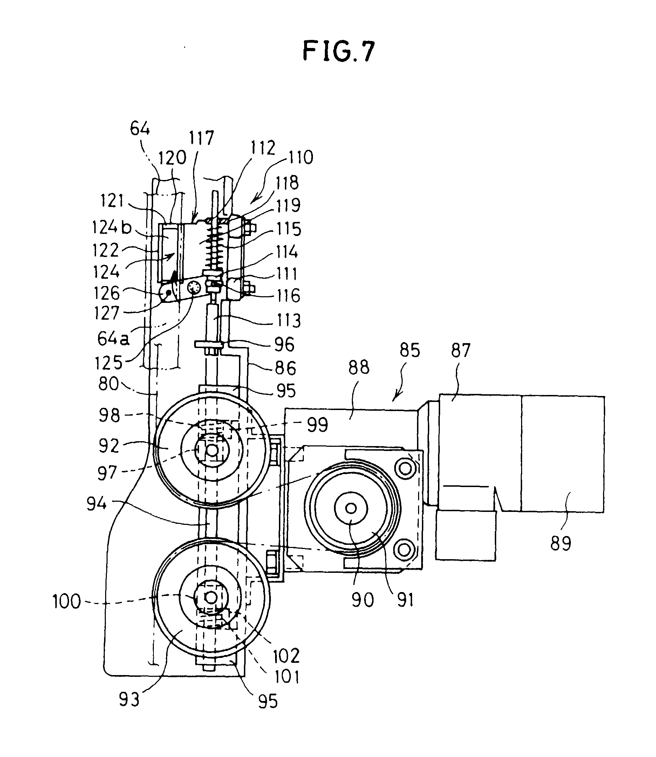

During upward or downward movement of the maintenance elevator 40, if both of the chains 80 become fractured, the fall preventive device 110 is automatically actuated, simultaneously with the functioning of the above described brake device, to prevent the maintenance elevator 40 from falling. More specifically, when the chains become fractured, the suspension tension acting upon the upper free-rotatable wheels 92 is released and accordingly various elements including rods 94, jumper plate 96, shafts 113, and block 114 are subjected to relative downward movement with respect to the body 111 under the resilient force of the compression coil springs 98, 115. As a result, the links 126 are pivoted about the support shaft 125 (as indicated by arrow A in FIG. 7) to elevate the pads 124 (as indicated by arrow B in FIG. 6).

As the pads 124 move upward, the inclined guided surfaces 124a are guided to the inclined guide faces 121a in a wedging fashion, so that holding surfaces 124b move toward the engagement portion 64 in such a manner that flat surfaces go into abutment against each other, whereupon the fall preventive device 110 goes into operation. Thus, the maintenance elevator 40 is prevented from falling due to the fracture of the chains 80.

It is to be noted that in the case of the chains 80 becoming fractured at a location lower than the toothed drive wheel 91, only the brake function works and the fall preventive device 110 does not operate.

In the above described embodiment, the control panel 55 is provided in a lower part of the bay window portion.
Alternatively, however, the control panel 55 may be disposed at a different location within the maintenance elevator 40, or in an upper part or side portion of the bay window portion 50. In the foregoing embodiment, the bay window portion 50 is provided at one side of the maintenance elevator 40. However, in another embodiment of the invention, the bay window portion 50 may be provided at the other side (door member 48 side) or at both sides of the maintenance elevator 40.

In the foregoing embodiment, the vertical run drive means 85 is disposed in such a manner that it projects outwardly from the underside of the maintenance elevator 40, so that a maintenance and checkup operation for the vertical run drive means 85 can be carried out in such a condition that the maintenance elevator 40 is held stationary at its lowered position at which the vertical run drive means 85 is located close to the upper surface of the lower frame 11. The outwardly projecting vertical run drive means 85 may be provided with an openable / closable cover or a removable cover as required.

The fall preventive device 110 in the foregoing embodiment is such that flat holding surfaces 122b of the pads 122 are brought in abutment against the flat abutment surfaces 66a thereby to prevent the maintenance elevator 40 from falling. As an alternative, however, the fall preventive device may be such one as utilizing cam-form brake elements as employed in the prior art.

In the foregoing embodiment, the engagement portion 64 is formed integrally with the guide rail 60. However, the abutment portion 64 may be formed separetely from the guide rail 60, thus formed abutment portion 64 being disposed on the post 12 side.

In the above described embodiment, the fall preventive device 110 as a vertically movable element, is disposed between the maintenance elevator 40 and the post 12. As an alternative, a fall preventive device 110 may be provided between the post 12 and the carriage 16.

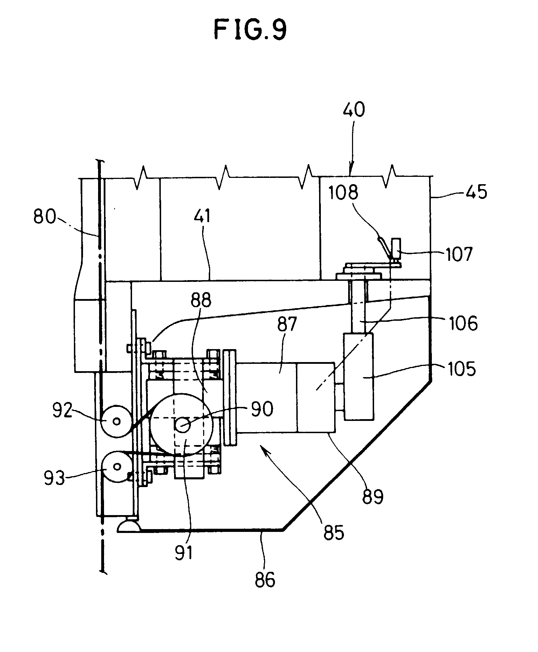

FIG. 9 shows another embodiment of the present invention. A control shaft 106 is geared to the brake device 89 via a differential device 105. The control shaft 106 projects into the body 47 and has a handle 107 provided on its projection for control turning. The handle 107 portion is provided with a lever 108 for releasing the brake device.

According to this embodiment, in case that the maintenance elevator 40, when in use, stops moving in an upper or intermediate portion of the vertical path for the maintenance elevator 40 due to, for example, some trouble with the electric system or power failure, the operator can lower the maintenance elevator 40 by manual control within the body 47. The operator, while holding the handle 107, can control the lever 108 to release the brake device 89. Then, the operator control the handle 107 so that the rotation effort is transmitted to the toothed drive wheel 91, whereby the maintenance elevator 40 can be lowered to its lowermost position.

Such arrangement for lowering the maintenance elevator 40 by manual control eliminates the need for such emergency escape ladder as has been used in the prior art. Further, in order to insure good safety during manual downward movement, it is arranged that even when hand slips off the handle 107 the lever 108 is released so that the brake device 89 is automatically engaged.

## Claims

1. A maintenance elevator-equipped handling apparatus (10) comprising a travelling body (14) having a lower frame (11) and a post (12) extending upwardly from the lower frame (11), a carriage (16) upwardly and downwardly moveable along one side of the post (12) as viewed in the direction of movement of the travelling body (14), and a maintenance elevator (40) moveable upwardly and downwardly along the other side of the post (12), characterized by a chain element (80) disposed along the post (12), and vertical run drive means (85) disposed on the underside of the maintenance elevator (40), and a toothed drive wheel (91) of said drive means (85) engaged with the chain element (80).

2. A maintenance elevator-equipped handling apparatus (10) according to claim 1, characterized by a ladder (29) provided in a lower portion of the post (12) at one side.

## Patentansprüche

1. Mit einem Aufzug für Wartungszwecke ausgerüstete Handhabungsvorrichtung (10), umfassend eine Fahreinheit (14) mit einem unteren Rahmen (11) und einer sich von dem unteren Rahmen (11) nach oben erstreckenden Säule (12), in Bewegungsrichtung der Fahreinheit (14) gesehen einen sich entlang einer Seite der Säule (12) auf- und abwärts bewegbaren Schlitten (16), und einen Aufzug (40) für Wartungszwecke, welcher entlang der anderen Seite der Säule (12) auf- und abwärts bewegbar ist, gekennzeichnet durch eine entlang der Säule (12) angeordnete Kette (80), einen an der Unterseite des Aufzugs (40) angeordneten Antrieb (85) zur Erzeugung einer vertikalen Bewegung und ein mit der Kette (80) in Eingriff stehendes, antreibendes Zahnrad (91) des Antriebs (85).

2. Mit einem Aufzug für Wartungszwecke ausgerüstete Handhabungsvorrichtung (10) gemäß Anspruch 1, gekennzeichnet durch eine Leiter (29), welche auf einer Seite der Säule (12) in ihrem unteren Abschnitt angeordnet ist.

## Revendications

1. Un dispositif de manutention (10) équipé d'un ascenseur d'entretien, comprenant un corps déplaçable (14) ayant un châssis inférieur (11) et un pylône (12) s'étendant vers le haut depuis le châssis inférieur (11), un chariot (16) déplaçable en montée et en descente sur un côté du pylône (12), en observant dans la direction de déplacement du corps déplaçable (14), et un ascenseur d'entretien (14) déplaçable en montée et en descente sur l'autre côté du pylône (12), caractérisé par un élément à chaîne (80), disposée le long du pylône (12), et des moyens d'entraînement à déplacement vertical (85), disposés sur la face intérieure de l'ascenseur d'entretien (40), et une roue d'entraînement dentée (91) desdits moyens d'entraînement (85) s'engrenant avec l'élément à chaîne (80).

2. Un dispositif de manutention équipé d'un ascenseur d'entretien (10) selon la revendication 1, caractérisé par une échelle (29) prévue en une position inférieure du pylône (12), sur un côté.
